# EUROPEAN PATENT SPECIFICATION

(11) **EP 2 618 018 B1**
(45) Date of publication and mention of the grant of the patent: **26.08.2020**
(21) Application number: 13151875.5
(22) Date of filing: 18.01.2013
(51) Int. Cl.: F16F 7/08, F16F 7/09

(54) **Improved friction damper**
Verbesserter Reibungsdämpfer
Amortisseur à friction amélioré

(30) Priority: 23.01.2012 IT PN20120004
(43) Date of publication of application: 24.07.2013
(73) Proprietor: RO-SA PLAST S.p.A., 33080 Porcia (PN) (IT)
(72) Inventor: Sandrin, Giannino, 33080 Porcia (PN) (IT)
(74) Representative: Giugni, Valter

(56) References cited:
- WO-A1-95/16813
- WO-A1-2005/033399
- WO-A2-00/67851
- GB-A- 1 072 286
- US-A- 2 562 595

## Description

### TECHNICAL FIELD OF INVENTION

The present invention refers to a friction damper, in particular for laundry treatment machines, such as dryers, washing-drying machines and laundry washing machines, comprising a friction system that is particularly effective due to its peculiar kinetic control thanks to the presence of at least one reservoir of lubricant and the absence of noise.

### BACKGROUND OF THE INVENTION

As is well known, laundry treatment machines generally include a housing frame containing a laundry treatment unit comprising a tub and a drum, an electric motor, one or more ballast elements and a set of drive and control devices that govern their operation.

In front-loading and top-loading machines having an axis of rotation of the drum horizontal to the support plane, the laundry treatment unit is usually suspended within the frame of the machine through a pair of springs, and is anchored to the frame at the bottom through one or more pairs of dampers.

The dampers have the function of dampening the oscillations/vibrations to which the laundry treatment unit is subjected during the operation of the washing machine, both by the effect of rotation of the drum around its own axis and of the unbalances caused by an uneven distribution of the load inside the drum.

In particular, the vibrations of the laundry treatment unit are stronger at the beginning and at the end of the centrifugation operations, when there is a greater variation in the rotational speed of the drum, while they are weaker or almost absent in the steady-state condition of rotation.

Among the dampers currently available on the market, friction dampers generally consist of a hollow cylindrical body, closed at one end, and a rod, coaxial to the body and sliding inside the cylindrical cavity.

Said friction dampers also have one or more friction elements between the inner surface of the hollow body and the external surface of the rod. Generally, said friction elements are fastened either on the surface of the hollow body or on the surface of the rod and are suitable to cooperate with the other surface to exert a frictional force sufficient to dampen/brake the oscillations of the drum.

These friction elements are annular bands of spongy polymeric material such as, for example, foam polyurethane. The bands are, in particular, fastened in a specific position and held there in a seat delimited, for example, by holding flanges that restrain their movement in an axial direction.

In addition, the contact surfaces on the hollow body and on the rod on which the friction elements operate are covered with oil or grease having the function of facilitating the sliding movement and of lubricating the same elements so as to avoid the premature wearing down of the parts caused by friction.

It has been seen that during the operation of said dampers, the lubricant tends to accumulate at the axial ends of the seat holding the friction elements. In this manner, the lubricant maintains a static position and is not spread evenly, with the disadvantage that some portions of the elements are not suitably lubricated, thus cancelling the proper and effective operation of the damper.

The effects of said failure are: a premature wearing down and a consequent reduction and possible breaking of the friction elements, overheating of the damper, noise from the damper caused by the excessive rubbing of improperly lubricated walls, and a scant damping effectiveness of the damper. Document WO 95/16813 A1, which is considered to be the closest prior art, discloses a friction damper according to the pre-amble of claim 1.

### SUMMARY OF THE INVENTION

The main objective of the subject matter of the present invention is to overcome the above-mentioned shortcomings, in particular by providing an adjustable friction damper for laundry treatment machines that is capable of distributing the lubricant correctly on all the friction surfaces of the friction elements in contact with each other.

This objective is achieved by a suitable prearrangement of the friction elements as specified in the main claim.

### BRIEF DESCRIPTION OF THE FIGURES

The advantages and characteristics of the invention will become evident through the following description, given by way of non-limiting example, with reference to the enclosed figures, wherein:
- figure 1 is an exploded axonometric view of the friction damper according to the present invention;
- figure 2 is an enlarged side view of a friction element of the damper of figure 1;
- figure 3 is a side view partially in cross section of the damper of figure 1 assembled;

- figure 4A is an enlarged view in cross section of a detail of the damper of figure 3 in a first operating condition;
- figure 4B is an enlarged view in cross section of a detail of the damper of figure 3 in a second operating condition;
- figure 5A is an axonometric view of the outer body of the damper of the invention;
- figure 5B is a plan view of the body of figure 5A;
- figure 5C is a side view of the body of figure 5A;
- figure 6 is a plan view of an assembly of four bodies of figure 5A;
- figure 7 is an axonometric view of a stack of dampers of the invention.

### DETAILED DESCRIPTION OF THE INVENTION

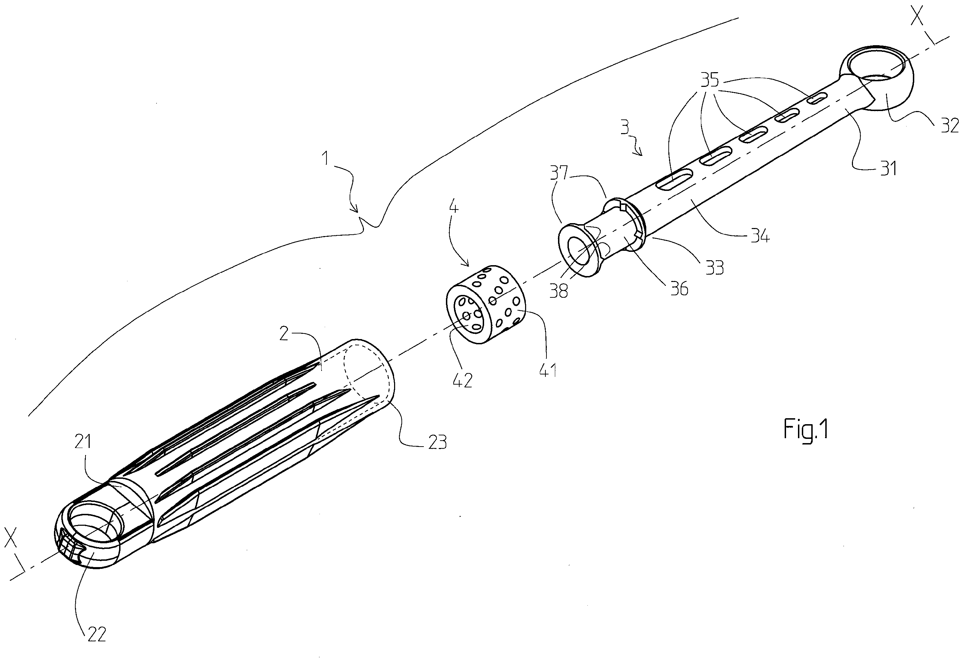

With reference to figure 1, number 1 indicates generally a friction damper extending longitudinally along an X-X axis. The damper 1 comprises a hollow cylindrical body 2, a rod 3 suitable to slidably engage the inside wall of said hollow body 2, and at least one braking or friction element 4 between the internal wall of the hollow cylindrical body and the external wall of the rod to provide the necessary frictional force.

The hollow cylindrical body 2 includes a first closed end 21 on which is provided an anchoring element 22, such as a loop, suitable to fasten the damper 1 to a conventional cabinet or frame (not shown) of a laundry treatment machine. A second end 23 is open to engage the rod 3. Preferably, the internal walls of the hollow cylindrical body 2 can be lined with a suitable layer of a material having a high resistance to wear, such as for example a metal foil or sleeve, such as a sheet of aluminium, which may be coated, or a film of thermoplastic polymeric material.

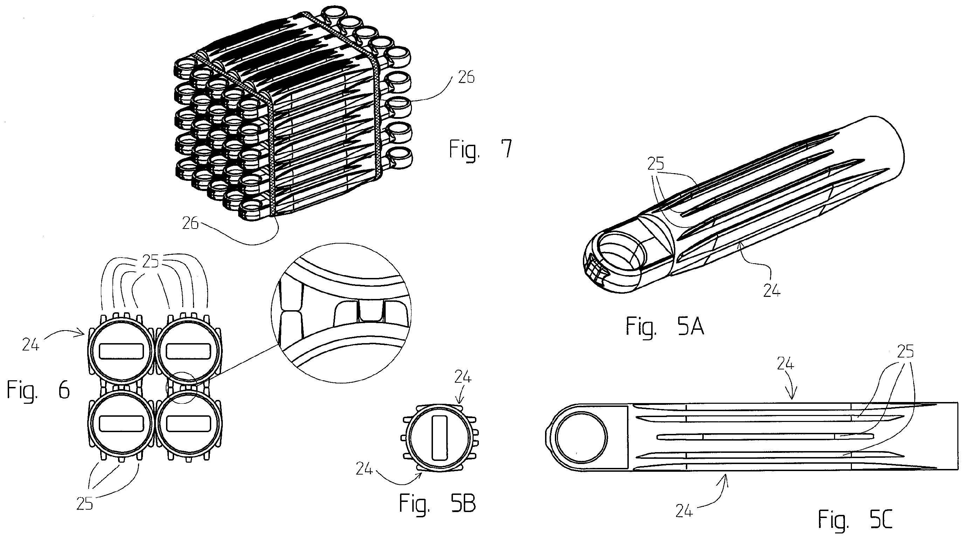

In accordance with a preferred embodiment of the invention, as shown in figures 5A-5C, 6 a 7, the body 2 can have two diametrically opposite flat surfaces 24, and a plurality of ribs 25 protruding from the external surface of the body 2 included between said flat surfaces 24. In particular, the ribs 25 can be arranged at least in part diametrically staggered so as to create a dap joint or in any case a stacking arrangement (see enlarged detail in figure 6). Advantageously, in fact, as shown in figure 7, said arrangement makes it possible, using two simple bands 26, to rapidly and safely fasten together a number of dampers in a compact manner. Further, the dap joint arrangement becomes self-supporting and makes it possible to operate directly in the assembly lines in an automatic manner, facilitating the management and handling of the individual pieces and eliminating packaging and relative waste disposal.

The rod 3 (figure 1) includes a first closed end 31 on which is provided an anchoring element 32, for example a loop, for fastening to the tub of the machine, connected to a second end 33 that engages the cavity of the cylindrical body 2 through a middle portion 34.

In general, the rod 3 has a substantially cylindrical shape having an outside diameter smaller than the inside diameter of the hollow cylindrical body 2. However, advantageously, the rod 3 shown in the figures has somewhat the shape of a truncated cone, with a smaller diameter at the end provided with the loop 32, thus also allowing small lateral oscillations of the rod with respect to the hollow cylindrical body. In addition, the middle portion 34 of the rod 3 can be provided with a plurality of openings 35, variously distributed, suitable to dissipate the heat that is generated during the alternating movement of the rod inside the hollow cylindrical body. In particular, the first end 33 of the rod 3 is provided with a seat 36 delimited by two flanges 37 or shoulders suitable to receive the friction element 4 coaxially to the rod.

Advantageously, the flanges 37 are provided with pushing or abutting elements 38 facing the direction of the axis X-X, that operate on the friction element 4 and cause it to swell, as is better described hereunder. Said elements 38 can be in the form of projections shaped so as to act as pushing elements without damaging the friction element. In particular, they are distributed along the surface of the flange 37 turned toward the seat 36 that holds said friction element.

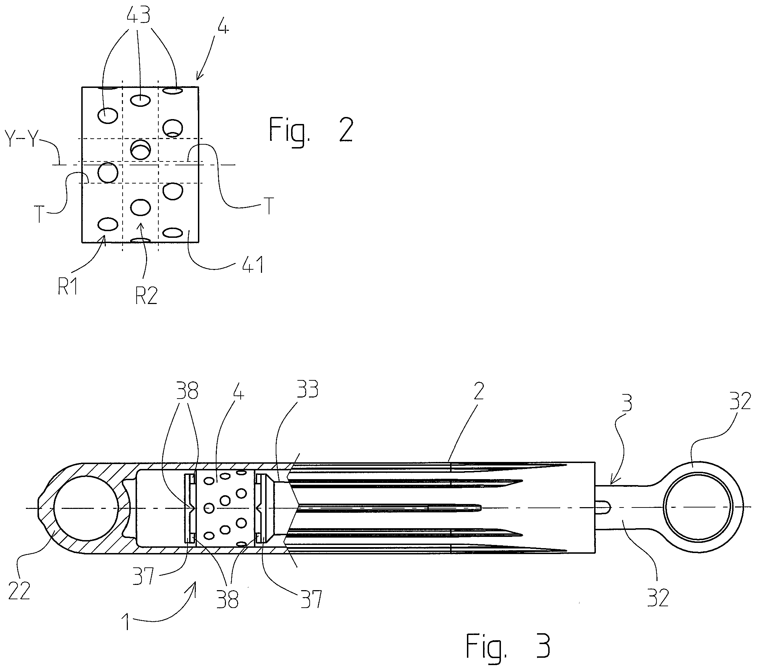

As shown in figures 2 and 3, the friction element 4 is preferably an annular band with a longitudinal axis Y-Y made, for example, of a polymeric material such as polyurethane foam, fitted onto said seat 36 and held there by means of the flanges 37. Said friction element 4 has an external annular contact surface 41 suitable to slidably cooperate with the inside surface of the hollow cylindrical body 2, and an internal annular contact surface 42 suitable to slidably cooperate with the external surface of the rod 3 in the seat 36 on said rod (figure 1).

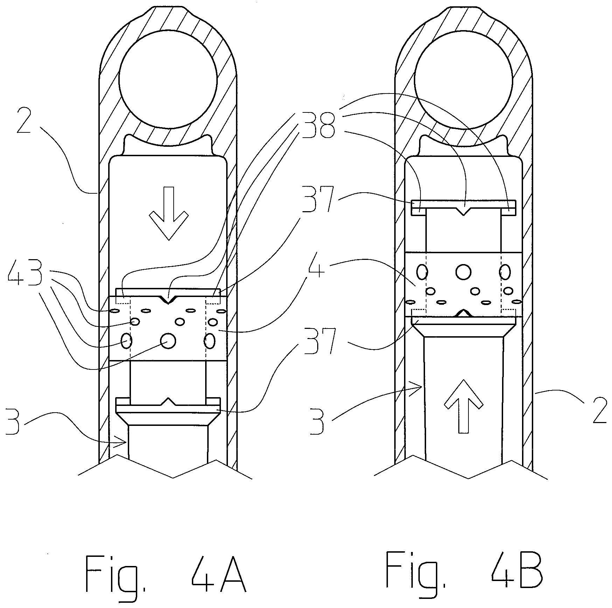

According to the invention, the friction element 4 is provided with a plurality 43 of through holes on the wall of the element. During the operation, that is when the rod 3 slides within the cylindrical body 2, as previously explained and as shown in figures 4A and 4B, the lubricant is drawn alternately toward one or the other shoulder 37 consequently to the oscillations transmitted by the movement of the drum in the laundry treatment machine. As a result, almost all the rubbing surface of the friction element 4 remains without lubricant. This drawback is avoided with the solution of the present invention because the holes 43 function as a kind of containers or reservoirs holding the lubricant. In fact, the holes, once they are initially filled with lubricant, during the operation of the damper and as a result of the pressures applied on the friction element, release small quantities of lubricant in various areas of the friction element so that it can lubricate all the portions of the same. In this manner, the whole frictional surface is maintained suitably lubricated.

In addition, the holes 43 work as a sort of pump that alternately releases and reabsorbs the lubricant. In other words, during the axial displacement of the rod 3 outward from the hollow body 2, as in figure 4A, the part of the holes 43 positioned near the flange 37 closest to the loop 22 is subjected to compression by the pushing elements 38. This compression causes the expulsion of a certain quantity of lubricant. The moment when the axial displacement is reversed, that is toward the inside the body 2, said holes 43 expand and suck back part of the lubricant released with the previous compression. At the same time, as shown in figure 4B, the holes 43 near the flange 37 farthest from the loop 22 are subjected to compression by the corresponding pushing elements 38. As in the previous case, there is a release of lubricant. When the movement is reversed, the holes 43 expand and suck in part of the lubricant previously released.

The above operation is then repeated cyclically with alternating compressions and expansions of the holes that work as a sort of reservoir releasing and reabsorbing the lubricant. The effect just described makes it possible to advantageously maintain a further automatic and optimal control of the correct lubrication of the parts involved in the braking or frictional action.

It was found experimentally that the greater the penetration of the pushing elements 38 into the friction element 4, the greater is the elastic expansion of the same friction element, and thus the frictional intensity is also greater. This reaction is therefore not constant but varies in proportion of the unbalance to be dampened. In this manner, an automatic adjustment of the braking capacity of the damper is ensured.

In agreement with a preferred embodiment, the plurality of holes 43 is distributed in one or more annular rows R1, R2, as shown in figure 2. In particular, the holes 43 in one row are axially staggered with respect to the holes 43 in the next row. It was found that this distribution of the holes makes it possible to further improve the distribution of the lubricant. More preferably, the holes are staggered so that the tangential straight line in the axial direction of a hole in a row R1 coincides with the axially tangential straight line of the contiguous hole of the other row R2. In other words, the diameter of each hole must be equal to the distance between two contiguous holes. This last embodiment has proved to be best for an optimal distribution of lubricant, especially during an intense operation of the dampers.

Both the rod 3 and the hollow cylindrical body 2 are conventionally made of a polymeric material of suitable firmness.

From the above, it is thus evident how a friction damper 1 according to the present invention resolves the previously mentioned drawbacks and achieves important advantages.

In the first place, the even distribution of lubricant over all the surface of the friction element makes it possible to maintain advantageously optimum conditions of operation of the damper.

The pumping effect previously described further increases the capability of correct distribution of the lubricant over the whole friction surface.

Moreover, the efficiency of the damper is maintained unaltered, thanks to the correct distribution of the lubricant.

Consequently, it is possible to avoid unwanted noise generated by improperly lubricated contact surfaces.

At the same time, the excessive and early wear of the sliding parts is avoided, as well as the harmful overheating of the damper.

The arrangement of the pushing elements also makes it possible to increase the efficiency of the damper, as the oscillations are minimized by simply causing a swelling or expansion of the friction element.

Further, said friction damper 1 can be made simply and economically with the usual well-known systems, machines and equipment, while guaranteeing a reliable operation.

The presence of the flat external surfaces 24 and of the respective coupling ribs 25 makes it possible to rapidly stack the dampers or only the external bodies simply and rapidly so as to ready them properly for the assembly operations without requiring additional handling to prepare the package.

Variants or modifications of the damper described above are possible for a person skilled in the field without departing from the scope of patent protection of the present invention as defined in the enclosed claims.

For example, shapes can be modified according to particular demands or preferences. In fact, the cross section of both the hollow body and of the rod can, for example, be square or rectangular, so that the friction element can be represented by a tampon applied on two opposite sides of the rod or fit by interference in a suitable slot to bulge from said opposite sides.

The plastic materials with which the hollow body and the rod are made can be chosen from conventional plastics such as, for example, polyamide or polypropylene, possibly reinforced with mineral and/or natural or synthetic fibres. The friction element, on the other hand, can be made of natural or synthetic rubber, preferably foamed, such as foam polyurethane, ethyl vinyl acetate (EVA).

Moreover, the materials forming the outside surface of the seat 36 of the rod 3 and the inside surface of the hollow cylindrical body 2 or its lining layer, or their surface roughness, can be different, so as to vary the friction coefficients of the two surfaces, and thus the principle that governs the movement relative to each other of the two bodies having the friction element 1 interposed therebetween. In this manner, it is possible to more accurately calibrate the degree of the damping effect.

The through holes 43 can be of any shape. In the figures, they are shown as having a circular shape, but they can also be oval, with the main axis disposed along to the X-X axis of the damper or transversal to it, or they may have a regular of irregular polygonal shape.

Although the friction damper described herein is preferably used in a laundry washing machine, it is understood that it can be used for different applications, as may be required.

## Claims

1. Friction damper (1) extending longitudinally along an axis (X-X), comprising a hollow body (2) having a first closed end (21) provided with a fixing element (22) and a second open end (23), a rod (3) for slidably engaging the inner wall of said hollow body (2), said rod having a first closed end (31) provided with a fixing element (32) and being connected to a second end (33) for engaging the cavity of the hollow body (2) through a middle portion (36), and at least a friction element (4) between the inner wall of the hollow body and the outer wall of the rod, said at least one friction element (4) being provided with a plurality of through holes (43) filled with a lubricant that is constantly released along the whole friction surface of said friction element during the functioning of the damper, wherein said plurality of holes (43) is disposed on one or more rows (R1, R2) orthogonally oriented with respect to the longitudinal axis (X-X) of the damper, the holes (43) of a row (R1) are axially staggered with respect to the holes (43) of the adjacent row (R2), **characterized in that** said hollow body (2) and said rod (3) have a generally cylindrical shape and said friction element (4) has a generally shape of an annular band, said friction element (4) is housed in a seat (36) delimited by two flanges (37) formed on the outer wall of said rod (3) on its second end (33), the flanges (37) have pushing or abutting elements (38) extending along the axis (X-X), which elements act on the friction element (4) causing its bulging, said elements (38) are teeth distributed along the annular surface of the flanges (37) towards the seat (36) housing said friction element (4) to compress the holes (43) in proximity of said teeth when the moving versus of the rod (3) is opposite with respect to the axial position of said holes with the effect of releasing some of the lubricant, while when the rod moves in the opposite direction the holes expand with the effect of recovering some lubricant.

2. Friction damper (1) according to claim 1, wherein the diameter of each hole (43) is equal to the distance between two adjacent holes.

3. Friction damper (1) according to any one of claims 1 or 2, wherein said middle portion (36) of the rod (3) is crossed by a plurality of apertures (37) for dissipating heat.

4. Laundry treatment machine comprising at least one friction damper (7) according to any one of claims 1 to 3.

## Patentansprüche

1. Reibungsdämpfer (1), der sich in Längsrichtung entlang einer Achse (X-X) erstreckt, umfassend einen Hohlkörper (2), der ein erstes geschlossenes Ende (21), das mit einem Befestigungselement (22) versehen ist, und ein zweites offenes Ende (23) aufweist, eine Stange (3) zum gleitenden Eingriff mit der Innenwand des Hohlkörpers (2), wobei die Stange ein erstes geschlossenes Ende (31) aufweist, das mit einem Befestigungselement (32) versehen und mit einem zweiten Ende (33) zum Eingriff mit dem Hohlraum des Hohlkörpers (2) durch einen Mittelabschnitt (36) verbunden ist, und mindestens ein Reibungselement (4) zwischen der Innenwand des Hohlkörpers und der Außenwand der Stange, wobei das mindestens eine Reibungselement (4) mit einer Vielzahl von Durchgangslöchern (43) versehen ist, die mit einem Schmiermittel gefüllt sind, das während des Betriebs des Dämpfers ständig entlang der gesamten Reibungsfläche des Reibungselements freigegeben wird, wobei die Vielzahl von Löchern (43) auf einer oder mehreren Reihen (R1, R2) angeordnet ist, die orthogonal zur Längsachse (X-X) des Dämpfers ausgerichtet sind, die Löcher (43) einer Reihe (R1) in Bezug auf die Löcher (43) der benachbarten Reihe (R2) axial versetzt sind, **dadurch gekennzeichnet, dass** der Hohlkörper (2) und die Stange (3) eine allgemein zylindrische Form haben und das Reibungselement (4) eine allgemeine Form eines ringförmigen Bandes hat, das Reibungselement (4) in einem Sitz (36) untergebracht ist, der durch zwei Flansche (37) begrenzt ist, die an der Außenwand der Stange (3) an ihrem zweiten Ende (33) ausgebildet sind, wobei die Flansche (37) Schub- oder Anschlagelemente (38) aufweisen, die sich entlang der Achse (X-X) erstrecken, wobei diese Elemente auf das Reibungselement (4) einwirken und dessen Auswölbung verursachen, wobei die Elemente (38) Zähne sind, die entlang der ringförmigen Oberfläche der Flansche (37) in Richtung auf den Sitz (36), der das Reibungselement (4) aufnimmt, verteilt sind, um die Löcher (43) in der Nähe der Zähne zusammenzudrücken, wenn die Bewegung gegen die Stange (3) in Bezug auf die axiale Position der Löcher entgegengesetzt ist, mit der Wirkung, einen Teil des Schmiermittels freizugeben, während, wenn sich die Stange in die entgegengesetzte Richtung bewegt, sich die Löcher mit der Wirkung ausdehnen, etwas Schmiermittel zurückzugewinnen.

2. Reibungsdämpfer (1) nach Anspruch 1, wobei der Durchmesser jedes Lochs (43) gleich dem Abstand zwischen zwei benachbarten Löchern ist.

3. Reibungsdämpfer (1) nach einem der Ansprüche 1 oder 2, wobei der Mittelteil (36) der Stange (3) von einer Vielzahl von Öffnungen (37) zur Wärmeableitung durchsetzt ist.

4. Wäschebehandlungsmaschine, umfassend mindestens einen Reibungsdämpfer (7) nach einem der Ansprüche 1 bis 3.

## Revendications

1. Amortisseur à friction (1) s'étendant longitudinalement le long d'un axe (X-X), comprenant un corps creux (2) ayant une première extrémité fermée (21) munie d'un élément de fixation (22) et une deuxième extrémité ouverte (23), une tige (3) pour engager de manière coulissante la paroi intérieure dudit corps creux (2), ladite tige ayant une première extrémité fermée (31) munie d'un élément de fixation (32) et étant connectée à une deuxième extrémité (33) pour engager la cavité du creux corps (2) à travers une partie médiane (36), et au moins un élément de friction (4) entre la paroi intérieure du corps creux et la paroi extérieure de la tige, ledit au moins un élément de friction (4) étant muni d'une pluralité de trous traversants (43) remplis d'un lubrifiant qui est constamment libéré le long de toute la surface de friction dudit élément de friction pendant le fonctionnement de l'amortisseur, dans lequel ladite pluralité de trous (43) est disposée sur une ou plusieurs rangées (R1, R2) orientées orthogonalement par rapport à l'axe longitudinal (X-X) de l'amortisseur, les trous (43) d'une rangée (R1) sont décalés axialement par rapport aux trous (43) de la rangée adjacente (R2), **caractérisé en ce que** ledit corps creux (2) et ladite tige (3) ont une forme généralement cylindrique et ledit élément de friction (4) a généralement une forme d'une bande annulaire, ledit élément de friction (4) est logé dans un siège (36) délimité par deux brides (37) formées sur la paroi extérieure de ladite tige (3) sur sa deuxième extrémité (33), les brides (37) ont des éléments de poussée ou de butée (38) s'étendant le long de l'axe (X-X), lesquels éléments agissent sur l'élément de friction (4) provoquant son bombement, lesdits éléments (38) sont des dents réparties le long de la surface annulaire des brides (37) vers le siège (36) logeant ledit élément de friction (4) pour comprimer les trous (43) à proximité desdites dents lorsque le déplacement relatif à la tige (3) est opposé par rapport à la position axiale desdits trous avec pour effet de libérer une partie du lubrifiant, tandis que lorsque la tige se déplace dans le sens opposé les trous s'élargissent avec pour effet de récupérer du lubrifiant.

2. Amortisseur à friction (1) selon la revendication 1, dans lequel le diamètre de chaque trou (43) est égal à la distance entre deux trous adjacents.

3. Amortisseur à friction (1) selon l'une quelconque des revendications 1 ou 2, dans lequel ladite partie médiane (36) de la tige (3) est traversée par une pluralité d'ouvertures (37) pour dissiper la chaleur.

4. Machine de traitement du linge comprenant au moins un amortisseur à friction (7) selon l'une quelconque des revendications 1 à 3.
